# EUROPÄISCHE PATENTSCHRIFT

(11) **EP 2 683 577 B1**
(45) Veröffentlichungstag und Bekanntmachung des Hinweises auf die Patenterteilung: **17.08.2016**
(21) Anmeldenummer: 11804492.4
(22) Anmeldetag: 08.12.2011
(51) Int. Cl.: B60R 21/13

(54) **ENTRIEGELUNGSVORRICHTUNG**
UNLOCKING DEVICE
DISPOSITIF DE DÉVERROUILLAGE

(30) Priorität: 07.03.2011 DE 102011013255
(43) Veröffentlichungstag der Anmeldung: 15.01.2014
(73) Patentinhaber: TRW Airbag Systems GmbH, 84544 Aschau am Inn (DE)
(72) Erfinder: ENZMANN, Ernst, 83224 Grassau (DE); HOFMANN, Achim, 84577 Tüssling (DE); RUCKDESCHEL, Rolf, 87645 Schwangau (DE); SEIDL, Johann, 84513 Töging (DE)
(74) Vertreter: Mehnert, Bernhard
(86) Internationale Anmeldenummer: PCT/EP2011/006185
(87) Internationale Veröffentlichungsnummer: WO 2012/119628

(56) Entgegenhaltungen:
- EP-A1- 1 514 740
- DE-A1- 10 210 328
- DE-A1- 19 922 674
- DE-A1-102008 002 135
- DE-A1-102008 043 443
- DE-A1-102009 001 536
- DE-B3-102004 015 808
- DE-T2- 60 115 539

## Beschreibung

Die Erfindung betrifft eine Entriegelungsvorrichtung nach dem jeweiligen Oberbegriff der Patentansprüche 1 und 2.

Aus dem Stand der Technik sind Entriegelungsvorrichtungen zur Entriegelung zweier miteinander verbundener Bauteile eines Fahrzeugs bekannt, durch die ein Riegel aus einer Verriegelungsstellung heraus gezogen werden kann. Solche, auch als ziehende Aktuatoren bezeichnete Entriegelungsvorrichtungen sind jedoch relativ aufwendig und teuer. Insbesondere sind solche Verriegelungsvorrichtungen der eingangs genannten Art aus der Druckschrift EP 1 514 740 A1 bekannt.

Demgegenüber liegt der Erfindung die Aufgabe zugrunde, eine kostengünstige Entriegelungsvorrichtung zu schaffen, welche eine Entriegelung zweier verbundener Bauteile auf schnelle Art und Weise ermöglicht.

Die Aufgabe wird erfindungsgemäß jeweils durch die Kennzeichen der Patentansprüche 1 und 2 gelöst. Indem bei der Lösung gemäß Patentanspruch 1 in einer Öffnungsstellung ein Verriegelungselement und ein Schubelement vollständig durch ein Verriegelungsloch hindurchgetreten, kann eine ungewollte Blockierung eines zu entriegelnden Bauteils zuverlässig verhindert werden. Daneben ist bei der Lösung gemäß Patentanspruch 2 durch eine Bewegung eines Zylinders ein Riegel von seiner Verriegelungsstellung in seine Öffnungsstellung verschiebbar, wodurch sehr wenige Teile zum Entriegeln nötig sind. Da die Kolben-Zylindereinheit umlenkungsfrei, das heißt ohne Gestänge oder Hebelmimik, mit dem Riegel verbunden ist, wird eine einfache und kompakte Bauweise der Entriegelungsvorrichtung ermöglicht, zumal der Kolben schiebend wirkt. Dabei ist die Bewegung der Kolben-Zylindereinheit insbesondere linear.

Es ist möglich, dass der Zylinder der Kolben-Zylindereinheit durch das zweite Bauteil gebildet ist. Auf diese Weise wird die Anzahl der benötigten Bauteile der Entriegelungsvorrichtung verringert.

Alternativ ist es möglich, dass die Kolben-Zylindereinheit eine separate Baugruppe ist, wobei der Zylinder oder Kolben am ersten oder am zweiten Bauteil befestigt ist. Dies ermöglicht beispielsweise eine separate Herstellung der Kolben-Zylindereinheit sowie einen einfachen Austausch der kompletten Kolben-Zylindereinheit.

Der Riegel kann durch den Kolben der Kolben-Zylindereinheit selbst oder ein am Kolben befestigtes drittes Bauteil gebildet sein. Dies ermöglicht eine kompakte Ausführung des Riegels.

Eine einfache direkte Entriegelung kann dadurch realisiert werden, dass der Kolben und/oder das am Kolben befestigte dritte Bauteil einen Verriegelungsabschnitt und einen Entriegelungsabschnitt aufweisen bzw. aufweist, die insbesondere unterschiedliche Querschnitte oder Durchmesser haben, wobei vorzugsweise der Entriegelungsabschnitt eine Ausnehmung bildet, entlang der das erste Bauteil im entriegelnden Zustand bewegbar ist.

Alternativ ist es möglich, dass der Riegel durch den Zylinder und/oder ein mit dem Zylinder verbundenes Bauteil gebildet wird, wobei der Zylinder zur Entriegelung bewegbar ist und der verriegelnde Abschnitt des Zylinders vom ersten Bauteil weg bewegbar ist, vorzugsweise indem der Kolben im Bereich des ersten Bauteils freigelegbar ist. Dadurch sind sehr wenige Teile zum Entriegeln nötig.

Ferner kann der Riegel durch ein Rastelement am ersten oder zweiten Bauteil ausgebildet sein, das durch die Kolben-Zylindereinheit aus der Verriegelungsstellung bewegbar ist, wobei das Rastelement vorzugsweise ein Fortsatz ist, der durch die Kolben-Zylindereinheit plastisch deformierbar ist. Über das Rastelement erfolgt eine sehr sichere Verriegelung, die manuell nicht gelöst werden kann.

Das Rastelement ist insbesondere ein durch plastisches Verformen gebildeter Fortsatz.

Das erste und/oder zweite Bauteil kann eine Verriegelungsausnehmung aufweisen, in welche der Riegel zumindest in der Verriegelungsstellung ragt und welche in Bewegungsrichtung des ersten Bauteils einen Hinterschnitt bildet, durch den eine Bewegung des ersten Bauteils in der Verriegelungsstellung verhinderbar ist.

Es ist auch möglich, dass das erste und/oder zweite Bauteil ein Verriegelungsloch aufweist. Der Riegel kann durch das Verriegelungsloch vollständig umgeben werden, wodurch eine hohe mechanische Stabilität des Bauteils erreicht wird.

Der Kolben kann beispielsweise mehrteilig ausgeführt sein. Dies ermöglicht eine flexible Ausgestaltung des Kolbens und die Zuordnung verschiedener Funktionen zu verschiedenen Kolbenelementen.

Um eine Bewegung des Riegels in der Ausgangsstellung vor Aktivierung der Entriegelungsvorrichtung zu verhindern, kann eine vom Kolben und Zylinder separate Positioniervorrichtung zum Halten des Riegels vor der Entriegelung in der Verriegelungsstellung vorgesehen sein,insbesondere um eine unbeabsichtigte Entriegelung zu verhindern.

Um nach der Entriegelung eine Zurückbewegung des Riegels in die Verriegelungsstellung zu verhindern, ist eine Fixiervorrichtung vorgesehen, welche den Riegel nach der Entriegelung in seiner Öffnungsstellung fixiert.

Der Riegel kann ein Betätigungselement aufweisen, welches eine manuelle Ver- und Entriegelung der Entriegelungsvorrichtung ermöglicht. Auf diese Weise lässt sich zusätzlich zur automatischen Entriegelung durch den pyrotechnischen Aktuator eine manuelle Entriegelung durchführen.

Bei oben beschriebener Entriegelungsvorrichtung kann die Entriegelungsrichtung (13) und eine Bewegungsrichtung (19) des Kolbens (24) oder des Zylinders (26) derart zueinander ausgerichtet sein, dass ein dazwischen liegender Winkel 45° bis 135°, vorzugsweise 80° bis 100 °, insbesondere 90° beträgt.

Die Erfindung betrifft ferner eine Fahrzeugschutzeinrichtung, insbesondere eine Insassenschutzvorrichtung, mit einem ersten, mit der Karosserie verbundenen Bauteil und einem zweiten Bauteil, welches über eine oben beschriebene Entriegelungsvorrichtung mit dem ersten Bauteil verbunden ist. Die Entriegelungsvorrichtung ist insbesondere Teil einer Sicherheitseinrichtung.

Eine erste bevorzugte Ausführungsform einer solchen Sicherheitseinrichtung ist ein Überrollbügel, mit einer Entriegelungsvorrichtung mit zumindest einem der zuvor genannten Merkmale.

Eine zweite bevorzugte Ausführungsform einer solchen Sicherheitseinrichtung ist eine aktive Kopfstütze, mit einer Entriegelungsvorrichtung mit zumindest einem der zuvor genannten Merkmale. Hierbei kann es sich insbesondere um eine Kopfstütze handeln, welche durch Aktivierung der Sicherheitseinrichtung von einer Ausgangsstellung in eine davon anders positionierte Endstellung bewegbar ist, insbesondere durch eine Kipp- und/oder Dreh- und/oder Hubbewegung der Kopfstütze.

Eine dritte bevorzugte Ausführungsform einer solchen Sicherheitseinrichtung ist ein Kabel- und/oder Leitungstrenner, bei dem zwei Kontaktstellen auseinander gebracht werden können, zum Beispiel indem eine Verriegelung eines Federmechanismus geöffnet wird, mit einer Entriegelungsvorrichtung mit zumindest einem der zuvor genannten Merkmale.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Entriegelungsvorrichtung gemäß eines ersten Beispiels zum Verständnis der Erfindung in ihrer Verriegelungsstellung;
- Figur 2 die Entriegelungsvorrichtung gemäß Figur 1 in ihrer Öffnungsstellung;
- Figur 3 eine Entriegelungsvorrichtung gemäß einer ersten Ausführungsform der Erfindung in ihrer Verriegelungsstellung;
- figur 4 die Entriegelungsvorrichtung gemäß Figur 3 in ihrer Offnungsstellung;
- Figur 5 eine Entriegelungsvorrichtung gemäß eines zweiten Beispiels zum Verständnis der Erfindung in ihrer Verriegelungsstellung;
- Figur 6 die Entriegelungsvorrichtung gemäß Figur 5 in aktivierter Stellung des Kolbens;
- Figur 7 die Entriegelungsvorrichtung gemäß der Figuren 5 und 6 in ihrer Öffnungsstellung;
- Figur 8 eine Entriegelungsvorrichtung gemäß eines dritten Beispiels zum Verständnis der Erfindung in ihrer Verriegelungsstellung;
- Figur 9 die Entriegelungsvorrichtung gemäß Figur 8 in ihrer Entriegelungsstellung;
- Figur 10 eine Entriegelungsvorrichtung gemäß einer zweiten Ausführungsform der Erfindung in ihrer Verriegelungsstellung;
- Figur 11 die Entriegelungsvorrichtung gemäß Figur 10 in ihrer Öffnungsstellung; und
- Figur 12 die Entriegelungsvorrichtung gemäß der Figuren 10 und 11 bei manueller Entriegelung.

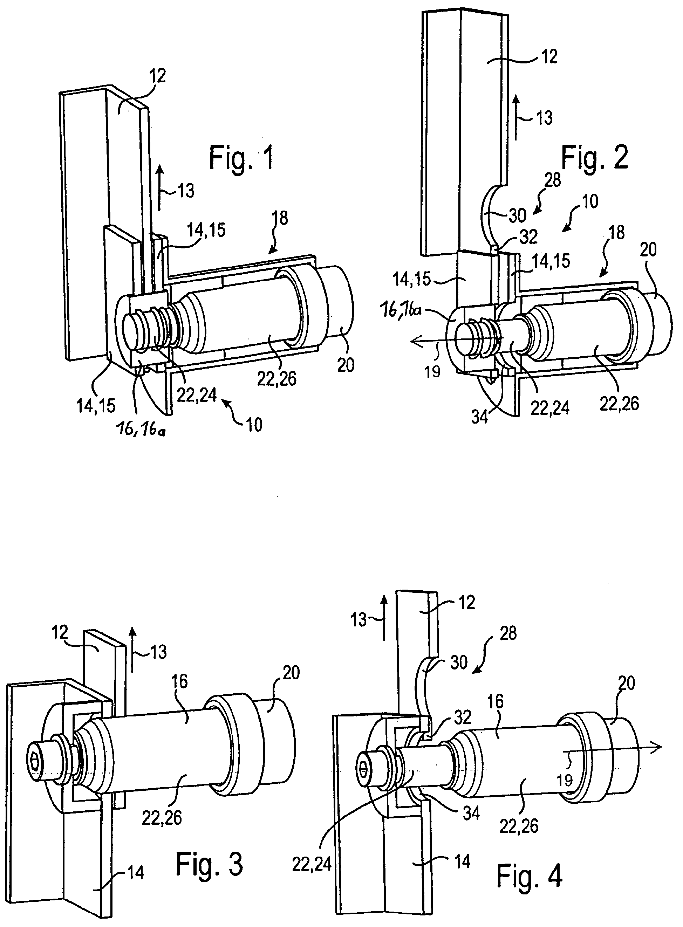

Ein erstes Beispiel einer Entriegelungsvorrichtung 10 ist in den Figuren 1 und 2 gezeigt. Figur 1 zeigt die Entriegelungsvorrichtung 10 in ihrer Verriegelungsstellung, in der die Entriegelungsvorrichtung 10 eine Verbindung zwischen einem ersten, zu entriegelnden Bauteil 12 und einem zweiten, hier durch zwei Wände 15 symbolisierten Bauteil 14 herstellt.

Die Entriegelungsvorrichtung 10 umfasst den Riegel 16 und einen pyrotechnischen Aktuator 18, welcher ein Pyrotechnikelement 20 mit einer Treibladung und eine Kolben-Zylindereinheit 22 mit einem Kolben 24 und einem Zylinder 26 aufweist. Die Kolben-Zylindereinheit 22 ist umlenkungsfrei mit dem Riegel 16 verbunden, sodass bei Bewegung des Kolbens 24 der Kolben-Zylindereinheit 22 der Riegel 16 von seiner Verriegelungsstellung in eine Öffnungsstellung linear geschoben wird. Dabei ist der Kolben 24 in Richtung einer Bewegungsrichtung 19 verschiebbar. Der Riegel 16 ist in dem ersten Beispieldurch ein unmittelbar am Kolben 24 befestigtes drittes Bauteil 16a, insbesondere durch eine aufgesteckte Manschette, gebildet.

In dem gezeigten Beispiel sind die beiden Bauteile 12, 14 so ausgebildet, dass eine Relativbewegung der Bauteile 12, 14 in einer Entriegelungsrichtung 13 möglich ist, wenn sich die Entriegelungsvorrichtung 10 in ihrer Öffnungsstellung befindet (siehe Figur 2).

In dem ersten Beispiel sind die Bewegungsrichtung 19 des Kolbens 24 und die Entriegelungsrichtung 13 derart gegenüber ausgerichtet, dass ein dazwischen liegender Winkel im Wesentlichen 90° beträgt. Denkbar ist auch, dass dieser Winkel in einem Bereich von 45° bis 135°, vorzugsweise 80° bis 100 ° liegt.

Das erste Bauteil 12 weist einen Wandabschnitt mit einer Verriegelungsausnehmung 28 auf, die in einem ersten Abschnitt 30 einen Hinterschnitt bildet. Das zweite Bauteil 14 umfasst zwei beabstandete Wände 15, zwischen denen der Wandabschnitt des ersten Bauteils 12 aufgenommen werden kann. Die beiden Wände 15 des zweiten Bauteils 14 weisen jeweils eine Verriegelungsausnehmung 34 auf. In der Verriegelungsstellung der Entriegelungsvorrichtung 10 ist der erste Abschnitt 30 der Verriegelungsausnehmung 28 des ersten Bauteils 12 auf die beiden Verriegelungsausnehmungen 34 der beiden Wände 15 des zweiten Bauteils 14 ausgerichtet. Der Riegel 16 erstreckt sich durch die drei Verriegelungsausnehmungen 28, 34 und stellt auf diese Weise eine zumindest abschnittsweise ormschlüssige Verbindung der beiden Bauteile 12, 14 her. Bei Zünden des Pyrotechnikelements 20 des pyrotechnischen Aktuators 18 wird ein Verbrennungsgas erzeugt, welches im Inneren des Zylinders 26 der Kolben-Zylindereinheit 22 auf den Kolben 24 derart einen Druck ausübt, dass der Kolben 24 dadurch verdrängt wird und somit eine lineare Relativbewegung von Kolben 24 zu Zylinder 26 statt findet.

Der Kolben 24 wird also aus dem Zylinder 26 geschoben, wodurch der am Kolben 24 befestigte Riegel 16 zumindest aus der Verriegelungsausnehmung 28 des ersten Bauteils 12 geschoben wird.

Die Verriegelungsausnehmung 28 des ersten Bauteils 12 weist, wie beschrieben, einen ersten Abschnitt 30 zur Aufnahme des Riegels 16 auf, der in Bewegungsrichtung 13 des ersten Bauteils 12 einen Hinterschnitt bildet. Die Verriegelungsausnehmung 28 weist ferner einen zweiten Abschnitt 32 auf, welcher so ausgebildet ist, dass er im verriegelten Zustand den Riegel zumindest abschnittsweise hintergreift und eine Bewegung des ersten Bauteils 12 in Bewegungsrichtung 13 verhindert. Der Abschnitt 32 erstreckt sich so weit, im Wesentlichen senkrecht, zur Bewegungsrichtung im Vergleich zum Querschnitt des Kolbens 24, dass sich das erste Bauteil 12 in Bewegungsrichtung 13 verschieben lässt, sobald der Riegel 16 verschoben wird und nur der im Querschnitt kleinere Kolben 24 in der Verriegelungsausnehmung 28 positioniert ist.

Das erste Bauteil 12 ist somit entriegelt (siehe Figur 2).

In dem ersten Beispiel sind die Verriegelungsausnehmungen 28, 34 jeweils als halbkreisförmige Ausnehmungen an einem Rand des ersten oder zweiten Bauteils 12, 14 ausgebildet. Die Verriegelungsausnehmungen 28, 34 können jedoch auch spiegelsymmetrisch ausgebildet sein, wobei die Verriegelungsausnehmung 28 des ersten Bauteil 12 eine Ausnehmungsform aufweist mit einem breiten ersten Abschnitt 30 und einem verjüngten zweiten Abschnitt 32.

Eine erste Ausführungsform der Entriegelungsvorrichtung 10 ist in den Figuren 3 und 4 gezeigt. In dieser Ausführungsform ist der Kolben 24 am zweiten Bauteil 14 befestigt und der Zylinder 26 beweglich gelagert, sodass bei Aktivierung des pyrotechnischen Aktuators 18 der bewegliche Zylinder 26 der Kolben-Zylindereinheit 22 eine Relativbewegung zum zweiten Bauteil 14 durchführen kann.

Der Riegel 16 wird in der ersten Ausführungsform durch den Zylinder 26 der Kolben-Zylindereinheit 22 gebildet. Wie in Figur 3 gezeigt, greift der Zylinder 26 in den ersten Abschnitt 30 der Verriegelungsausnehmung 28 des ersten Bauteils 12 ein und bildet mit diesem eine zumindest abschnittsweise formschlüssige Verbindung.

Bei Aktivierung des pyrotechnischen Aktuators 18 erzeugt die Treibladung des Pyrotechnikelements 20 ein Gasvolumen, welches Kolben 24 und Zylinder 26 der Kolben-Zylindereinheit 22 auseinander drückt, den Zylinder 26 aus der Verriegelungsausnehmung 28 herausschiebt und somit das erste Bauteil 12 entriegelt. Dabei ist der Zylinder 26 in Richtung einer Bewegungsrichtung 19 verschiebbar. Ein zweiter Abschnitt 32 der Verriegelungsausnehmung 28 ist wiederum so ausgebildet, dass der Kolben 24, welcher einen geringeren Radius als der Zylinder 26 aufweist, gegenüber dem zweiten Abschnitt 32 keine Verriegelung bildet, sodass das erste Bauteil am Kolben 24 entlang in Entriegelungsrichtung 13 verschoben werden kann.

In der ersten Ausführungsform sind die Bewegungsrichtung 19 des Zylinders 26 und die Entriegelungsrichtung 13 derart gegenüber positioniert, dass ein Winkel zwischen diesen beiden Richtungen im Wesentlichen 90° beträgt.

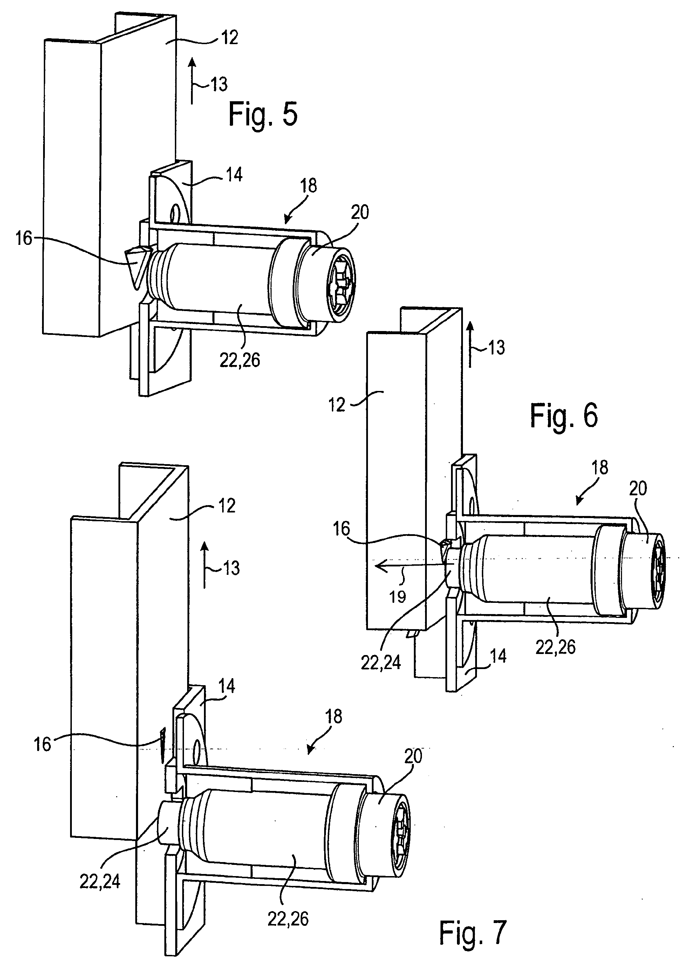

Ein zweites Beispiel einer Entriegelungsvorrichtung ist in den Figuren 5, 6 und 7 gezeigt, wobei der Riegel 16 durch ein Rastelement am ersten Bauteil 12 ausgebildet ist. Das Rastelement ist in der Verriegelungsstellung in Figur 5 in einer Verriegelungsausnehmung 34 in Form eines Loches im zweiten Bauteil 14 eingerastet, wodurch eine Relativbewegung des ersten und zweiten Bauteils 12, 14 in Bewegungsrichtung 13 verhindert wird. Das Rastelement ist in dem gezeigten Beispiel ein ausgestellter Wandabschnitt des ersten Bauteils 12.

Die Kolben-Zylindereinheit 22 des pyrotechnischen Aktuators 18 ist so angeordnet, dass der Kolben 24 auf das Rastelement gerichtet ist. Bei Aktivierung des pyrotechnischen Aktuators 18 erzeugt die Treibladung des Pyrotechnikelements 20 ein Gasvolumen, welches den Kolben 24 aus dem Zylinder 26 der Kolben-Zylindereinheit 22 drückt.

Der Kolben 24 schlägt gegen das Rastelement und verformt dieses, sodass die Rastverbindung mit der Verriegelungsausnehmung 34 des zweiten Bauteils 14 gelöst wird, wie in Figur 6 dargestellt.

In dem gezeigten Beispielwird das Rastelement plastisch verformt, sodass die Entriegelungsvorrichtung 10 permanent entriegelt ist. Figur 7 zeigt die Entriegelungsvorrichtung 10 in der Öffnungsstellung mit deformiertem Rastelement.

Alternativ kann das Rastelement so ausgebildet sein, dass der Kolben 24 eine rein elastische Deformation des Rastelements bewirkt. Auf diese Weise kann eine Verbindung der Bauteile 12, 14 auch nach dem Auslösen des pyrotechnischen Aktuators 18 wiederhergestellt werden, indem beispielsweise das Bauteil 12 wieder in seine ursprüngliche Position, in eine Verriegelungsstellung, zurückbewegt wird, vorzugsweise durch manuelle Bewegung des Bauteils 12.

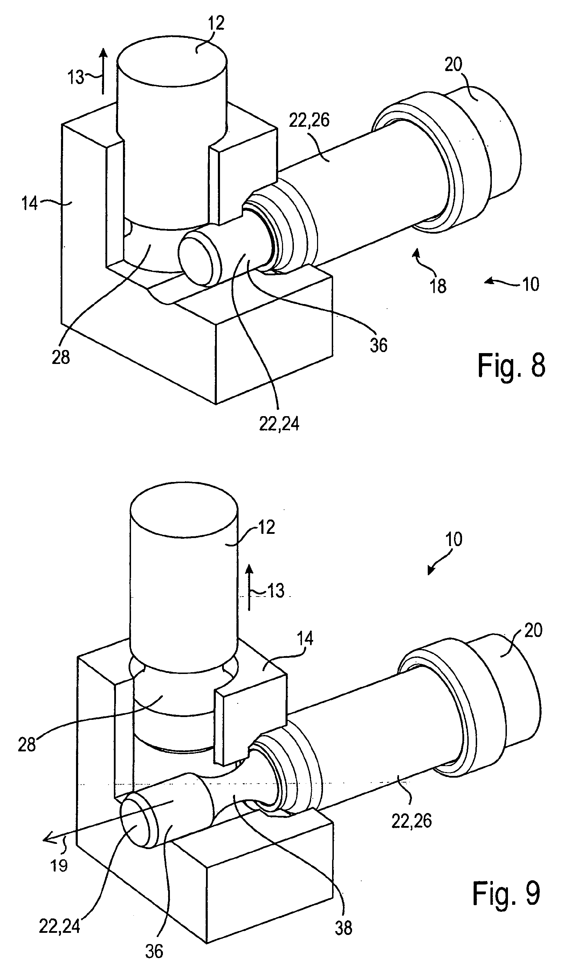

Eine drittes Beispiel einer Entriegelungsvorrichtung ist in den Figuren 8 und 9 in dreidimensionaler Ansicht gezeigt. Das erste Bauteil 12 ist als zylinderischer Zapfen mit einer Verriegelungsausnehmung 28 ausgebildet, wobei die Verriegelungsausnehmung 28 eine in Umfangsrichtung verlaufende Nut ist. Die Kolben-Zylindereinheit 22 des pyrotechnischen Aktuators 18 ist mit dem Zylinder 26 am zweiten Bauteil 14 befestigt.

In Figur 8 greift der Kolben 24 mit einem Verriegelungsabschnitt 36 in die Nut der Verriegelungsausnehmung 28 des ersten Bauteils 12 ein, wodurch eine zumindest abschnittsweise formschlüssige Verbindung zwischen dem ersten und zweiten Bauteil 12, 14 hergestellt wird. Bei Aktivierung des pyrotechnischen Aktuators 18 zündet die Treibladung des Pyrotechnikelements 20 und erzeugt ein Gasvolumen, welches den Kolben 24 aus dem Zylinder 26 der Kolben-Zylindereinheit 22 in die Öffnungsstellung der Entriegelungsvorrichtung 10 drückt.

Die Öffnungsstellung der Entriegelungsvorrichtung 10 ist in Figur 9 dargestellt. Der Kolben 24 weist einen Entriegelungsabschnitt 38 auf, welcher gegenüber dem Verriegelungsabschnitt 36 einen reduzierten Querschnitt hat. Aufgrund des reduzierten Querschnitts des Entriegelungsabschnitts 38 ist die formschlüssige Verbindung zwischen erstem Bauteil 12 und zweitem Bauteil 14 in der Öffnungsstellung in Figur 9 gelöst. Der Entriegelungsabschnitt 38 bildet eine Ausnehmung, entlang der sich das erste Bauteil 12 im entriegelten Zustand, entlang einer Entriegelungsrichtung 13, bewegen kann.

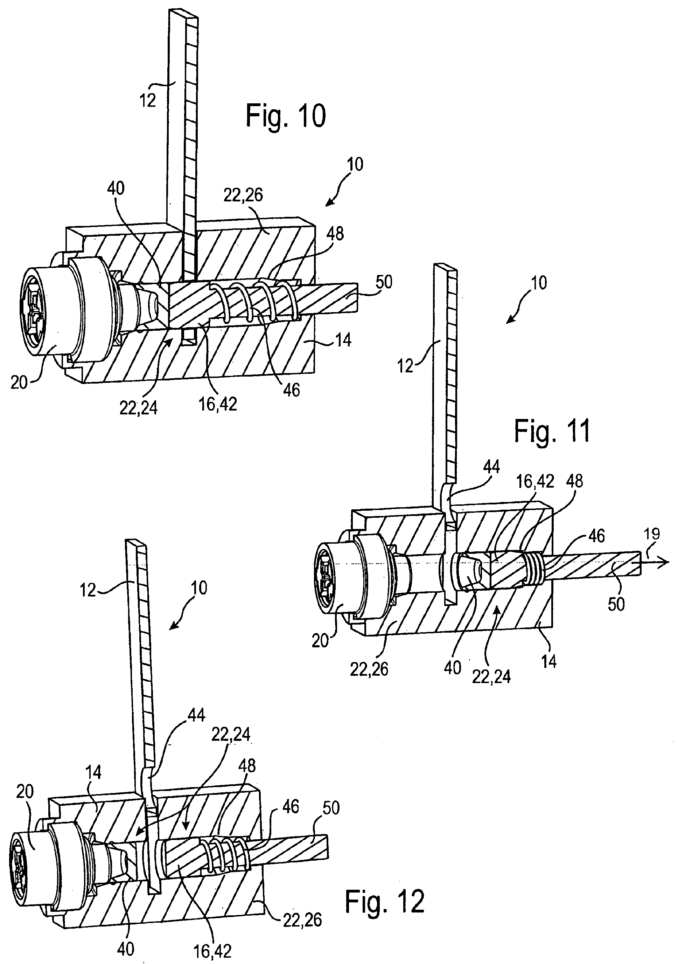

Die Figuren 10, 11 und 12 zeigen eine zweite Ausführungsform der Erfindung. In dieser Ausführungsform wird der Zylinder 26 der Kolben-Zylindereinheit 22 durch das zweite Bauteil 14 gebildet.

Der Kolben 24 der Kolben-Zylindereinheit 22 ist zweiteilig ausgebildet mit einem Schubelement 40 und einem Verriegelungselement 42.

Figur 10 zeigt die Verriegelungsstellung der Entriegelungsvorrichtung 10, wobei das erste, zu entriegelnde Bauteil 12 ein Verriegelungsloch 44 aufweist, welches vollständig durch das erste Bauteil 12 begrenzt wird. Das Verriegelungselement 42 des Kolbens 24 erstreckt sich durch das Verriegelungsloch 44 und stellt eine zumindest abschnittsweise formschlüssige Verbindung zwischen dem ersten Bauteil 12 und dem zweiten Bauteil 14 her. Das Schubelement 40 des Kolbens 24 liegt direkt am Pyrotechnikelement 20 des pyrotechnischen Aktuators 18 an.

Eine Feder dient als Positioniervorrichtung 46, welche den Kolben 24 mit Schubelement 40 und Verriegelungselement 42 in der Verriegelungsstellung der Entriegelungsvorrichtung mit einer Kraft beaufschlagt, wodurch der Kolben 24, insbesondere dessen Verriegelungselement 42 in der Verriegelungsstellung gehalten wird.

Bei Zündung des pyrotechnischen Aktuators 18 setzt die Treibladung des Pyrotechnikelements 20 ein Gasvolumen frei, welches das Schubelement 40 des Kolbens 24 gegen das Verriegelungselement 42 drückt und aus der Verriegelungsstellung in die in Figur 11 gezeigte Öffnungsstellung der Entriegelungsvorrichtung 10 bewegt.

Eine Fixiervorrichtung 48 ist vorgesehen, die das Verriegelungselement 42 nach der Entriegelung in seiner Öffnungsstellung fixiert. Die Fixierung erfolgt, indem das Verriegelungselement 42 aufgrund der Aktivierung des pyrotechnischen Aktuators 18 in seiner Öffnungsstellung in einen sich verjüngenden Abschnitt des Zylinders 26, insbesondere in eine Führungsbohrung für den Kolben 24, gedrückt und in diesem geklemmt wird.

In der Öffnungsstellung sind Verriegelungselement 42 und Schubelement 40 des Kolbens 24 vollständig durch das Verriegelungsloch 44 getreten, sodass die formschlüssige Verbindung des ersten und zweiten Bauteils 12, 14 durch das Verriegelungselement 42 gelöst ist.

Figur 12 zeigt die Entriegelungsvorrichtung 10 vor dem Zünden des pyrotechnischen Aktuators 18 in einer Montagestellung. Das Verriegelungselement 42 weist ein Betätigungselement 50 auf, welches aus dem zweiten Bauteil 14 herausragt und eine manuelle Verschiebung des Verriegelungselements 42 und somit des Riegels 16 erlaubt. In der Montagestellung wird das Verriegelungselement 42 durch das Betätigungselement 50 entgegen der Federkraft der Positioniervorrichtung 46 in eine entriegelte Stellung gezogen, während das Schubelement 40 weiterhin direkt am Pyrotechnikelement 20 angeordnet ist, sodass ein Spalt zwischen Schub- und Verriegelungselement 40, 42 entsteht. In dieser Stellung kann das erste Bauteil 12 in das zweite Bauteil 14 und in den Spalt eingeführt werden. Anschließend kann das Betätigungselement 50 losgelassen werden, wodurch das Verriegelungselement 42 durch die Feder der Positioniervorrichtung 46 in die Verriegelungsstellung gebracht wird und der Spalt geschlossen wird.

Neben der Montage der Entriegelungsvorrichtung 10 kann auf diese Weise eine grundsätzliche manuelle Ver- und Entriegelung der Entriegelungsvorrichtung 10 ermöglicht werden.

Verschiedene Merkmale der unterschiedlichen Ausführungsformen können auch miteinander kombiniert werden. Insbesondere können Positioniervorrichtungen 46 vorgesehen sein, die zum Halten des Riegels 16 vor der Entriegelung in der Verriegelungsstellung vorgesehen sind.

Alternativ zu Positioniervorrichtungen, welche den Riegel in seine Verriegelungsstellung beaufschlagen, können auch Positioniervorrichtungen vorgesehen sein, die beispielsweise den Riegel durch Sollbruchstellen in seiner Ausgangsstellung fixieren, wobei die Sollbruchstellen so ausgelegt sind, dass sie bei normalen Belastungen bestehen bleiben und im Auslösefall bei Aktivierung des pyrotechnischen Aktuators 18 aufbrechen und eine Bewegung des Riegels 16 ermöglichen.

Ferner können Fixiervorrichtungen vorgesehen sein, welche den Riegel 16 nach der Entriegelung in seiner Öffnungsstellung fixieren.

Die Entriegelungsvorrichtungen 10 sind zur Entriegelung miteinander verbundener Bauteile eines Fahrzeugs vorgesehen, wobei das erste oder zweite Bauteil 12, 14 mit der Karosserie verbunden ist und das andere Bauteil 14, 12 über die Entriegelungsvorrichtung 10 mit dem ersten oder zweiten Bauteil 12, 14 verbunden ist.

## Patentansprüche

1. Entriegelungsvorrichtung (10), insbesondere für eine Fahrzeugschutzeinrichtung,
mit einem Riegel (16), welcher in einer Verriegelungsstellung eine zumindest abschnittsweise formschlüssige Verbindung zwischen einem ersten, zu entriegelnden Bauteil (12) und einem zweiten Bauteil (14) herstellt und in einer Öffnungsstellung eine Relativbewegung der beiden Bauteile (12, 14) ermöglicht,
und einem pyrotechnischen Aktuator (18), welcher ein Pyrotechnikelement (20) mit einer Treibladung und eine Kolben-Zylindereinheit (22) mit einem Kolben (24) und einem Zylinder (26) aufweist,
wobei aufgrund einer Aktivierung der Treibladung eine Bewegung des Kolbens (24) erzeugbar ist,
und wobei die Kolben-Zylindereinheit (22) umlenkungsfrei mit dem Riegel (16) verbunden ist, sodass bei Bewegung des Kolbens (24) der Riegel (16) von seiner Verriegelungsstellung in seine Öffnungsstellung verschiebbar ist, wobei das erste Bauteil (12) ein Verriegelungsloch (44) aufweist, in welches der Riegel (16) zumindest in der Verriegelungsstellung ragt, wobei der Kolben (24) der Kolben-Zylindereinheit (22) zweiteilig ausgebildet ist mit einem Schubelement (40) und einem Verriegelungselement (42), **dadurch gekennzeichnet, dass** das Schubelement (40) und das Verriegelungselement (42) so angeordnet sind, dass in der Öffnungsstellung das Verriegelungselement (42) und das Schubelement (40) vollständig durch das Verriegelungsloch (44) getreten sind, sodass die formschlüssige Verbindung des ersten und des zweiten Bauteils (12, 14) durch das Verriegelungselement (42) gelöst ist.

2. Entriegelungsvorrichtung (10), insbesondere für eine Fahrzeugschutzeinrichtung,
mit einem Riegel (16), welcher in einer Verriegelungsstellung eine zumindest abschnittsweise formschlüssige Verbindung zwischen einem ersten, zu entriegelnden Bauteil (12) und einem zweiten Bauteil (14) herstellt und in einer Öffnungsstellung eine Relativbewegung der beiden Bauteile (12, 14) ermöglicht,
und einem pyrotechnischen Aktuator (18), welcher ein Pyrotechnikelement (20) mit einer Treibladung und eine Kolben-Zylindereinheit (22) mit einem Kolben (24) und einem Zylinder (26) aufweist,
**dadurch gekennzeichnet, dass** aufgrund einer Aktivierung der Treibladung eine Bewegung des Zylinders (26) erzeugbar ist, und wobei die Kolben-Zylindereinheit (22) umlenkungsfrei mit dem Riegel (16) verbunden ist, sodass bei Bewegung des Zylinders (26) der Riegel (16) von seiner Verriegelungsstellung in seine Öffnungsstellung verschiebbar ist.

3. Entriegelungsvorrichtung gemäß Anspruch 1, **dadurch gekennzeichnet, dass** der Zylinder (26) der Kolben-Zylindereinheit (22) durch das zweite Bauteil (14) gebildet ist, und/oder **dadurch gekennzeichnet, dass** der Riegel (16) durch den Kolben (24) der Kolben-Zylindereinheit (22) selbst gebildet wird.

4. Entriegelungsvorrichtung gemäß Anspruch 2, **dadurch gekennzeichnet, dass** die Kolben-Zylindereinheit (22) eine separate Baugruppe ist, wobei der Kolben (24) am zweiten Bauteil (14) befestigt ist.

5. Entriegelungsvorrichtung gemäß Anspruch 2, **dadurch gekennzeichnet, dass** der Kolben (24) und/oder ein am Kolben befestigtes drittes Bauteil (16a) einen Verriegelungsabschnitt (36) und einen Entriegelungsabschnitt (38) aufweist, die insbesondere unterschiedliche Querschnitte oder Durchmesser haben, wobei vorzugsweise der Entriegelungsabschnitt (38) eine Ausnehmung bildet, entlang der das erste Bauteil (12) im entriegelten Zustand bewegbar ist.

6. Entriegelungsvorrichtung gemäß einem der voranstehenden Ansprüche 2 oder 4, **dadurch gekennzeichnet, dass** der Riegel (16) durch den Zylinder (26) und/oder ein mit dem Zylinder (26) verbundenes Bauteil gebildet wird, wobei der Zylinder (26) zur Entriegelung bewegbar ist und der verriegelnde Abschnitt des Zylinders (26) vom ersten Bauteil (12) weg bewegbar ist, vorzugsweise indem der Kolben (24) im Bereich des ersten Bauteils (12) freigelegbar ist.

7. Entriegelungsvorrichtung gemäß einem der voranstehenden Ansprüche 1 oder 3, **dadurch gekennzeichnet, dass** eine Fixiervorrichtung (48) vorgesehen ist, welche den Riegel (16) nach der Entriegelung in seiner Öffnungsstellung fixiert, und/oder **dadurch gekennzeichnet, dass** eine von Kolben (24) und Zylinder (26) separate Positioniervorrichtung (46) zum Halten des Riegels (16) in der Verriegelungsstellung vorgesehen ist, insbesondere um eine unbeabsichtigte Entriegelung zu verhindern.

8. Entriegelungsvorrichtung gemäß einem der voranstehenden Ansprüche 1, 3 oder 7, **dadurch gekennzeichnet, dass** der Riegel (16) ein Betätigungselement (50) aufweist, welches eine manuelle Ver- und Entriegelung der Entriegelungsvorrichtung (10) ermöglicht.

9. Entriegelungsvorrichtung gemäß einem der voranstehenden Ansprüche, **dadurch gekennzeichnet, dass** die Entriegelungsrichtung (13) und eine Bewegungsrichtung (19) des Kolbens (24) oder des Zylinders (26) derart zueinander ausgerichtet sind, dass ein dazwischen liegender Winkel 45° bis 135°, vorzugsweise 80° bis 100 °, insbesondere 90° beträgt.

10. Fahrzeugschutzeinrichtung, insbesondere Insassenschutzvorrichtung, mit einer Entriegelungsvorrichtung (10) gemäß einem der voranstehenden Ansprüche, wobei das erste oder zweite Bauteil (12, 14) der Entriegelungsvorrichtung (10) mit der Fahrzeug-Karosserie verbunden ist, und das andere Bauteil (14, 12) über die Entriegelungsvorrichtung (10) mit dem ersten oder zweiten Bauteil (12, 14) verbunden ist.

## Claims

1. A release device (10), especially for a vehicle protection device,
comprising a locking bar (16) which in a locking position establishes a connection positive at least in sections between a first component (12) to be released and a second component (14) and in an opening position enables a relative movement of the two components (12, 14),
and a pyrotechnical actuator (18) including a pyrotechnical element (20) comprising a propellant and a piston-and-cylinder unit (22) comprising a piston (24) and a cylinder (26),
wherein a movement of the piston (24) can be generated due to an activation of the propellant,
and wherein the piston-and-cylinder unit (22) is connected to the locking bar (16) free of deflection so that upon movement of the piston (24) the locking bar (16) can be shifted from its locking position to its opening position, the first component (12) having a locking hole (44) into which the locking bar (16) protrudes at least in the locking position, the piston (24) of the piston-and-cylinder unit (22) being configured in two parts comprising a pushing element (40) and a locking element (42), **characterized in that** the pushing element (40) and the locking element (42) are arranged so that in the opening position the locking element (42) and the pushing element (40) have passed completely through the locking hole (44) so that the positive connection of the first and second components (12, 14) by the locking element (42) is released.

2. A release device (10), especially for a vehicle protection device,
comprising a locking bar (16) which in a locking position establishes a connection positive at least in sections between a first component (12) to be released and a second component (14) and in an opening position enables a relative movement of the two components (12, 14),
and a pyrotechnical actuator (18) including a pyrotechnical element (20) comprising a propellant and a piston-and-cylinder unit (22) comprising a piston (24) and a cylinder (26),
**characterized in that** a movement of the cylinder (26) can be generated due to an activation of the propellant, and wherein the piston-and-cylinder unit (22) is connected to the locking bar (16) free of deflection so that upon movement of the cylinder (26) the locking bar (16) can be shifted from its locking position to its opening position.

3. The release device according to claim 1, **characterized in that** the cylinder (26) of the piston-and-cylinder unit (22) is formed by the second component (14) and/or **characterized in that** the locking bar (16) is formed by the piston (24) of the piston-and-cylinder unit (22) itself.

4. The release device according to claim 2, **characterized in that** the piston-and-cylinder unit (22) is a separate sub-assembly with the piston (24) being mounted on the second component (14).

5. The release device according to claim 2, **characterized in that** the piston (24) and/or a third component (16a) mounted on the piston includes a locking portion (36) and a release portion (38) which especially have different cross-sections or diameters, wherein preferably the release portion (38) forms a recess along which the first component (12) is movable in the released state.

6. The release device according to any one of the preceding claims 2 or 4, **characterized in that** the locking bar (16) is formed by the cylinder (26) and/or a component connected to the cylinder (26), wherein the cylinder (26) is movable for being released and the locking portion of the cylinder (26) is movable away from the first component (12), preferably **in that** the piston (24) is adapted to be exposed in the area of the first component (12).

7. The release device according to any one of the preceding claims 1 or 3, **characterized in that** a fixing device (48) is provided for fixing the locking bar (16) after release in its opening position and/or **characterized in that** a positioning device (46) separate from the piston (24) and the cylinder (26) is provided for retaining the locking bar (16) in the locking position, in particular for preventing inadvertent release.

8. The release device according to any one of the preceding claims 1, 3 or 7, **characterized in that** the locking bar (16) includes an actuating element (50) which enables the release device (10) to be manually locked and released.

9. The release device according to any one of the preceding claims, **characterized in that** the direction of release (13) and a direction of movement (19) of the piston (24) or of the cylinder (26) are aligned with each other so that an angle formed therebetween ranges from 45° to 135°, preferably from 80° to 100°, especially amounts to 90°.

10. A vehicle protection device, especially an occupant protection device, comprising a release device (10) according to any one of the preceding claims, wherein the first or second component (12, 14) of the release device (10) is connected to the vehicle body and the other component (12, 14) is connected to the first or second component (12, 14) via the release device (10).

## Revendications

1. Dispositif de déverrouillage (10), en particulier pour un dispositif de protection de véhicule,
avec un verrou (16), lequel dans une position de verrouillage établit une connexion mâle-femelle au moins partiellement entre un premier composant déverrouillable (12) et un second composant (14) et permet, dans une position ouverte, un mouvement relatif des deux composants (12,14),
et un actionneur pyrotechnique (18) comprenant un élément pyrotechnique (20) avec une charge propulsive et une unité piston-cylindre (22) comportant un piston (24) et un cylindre (26),
pour lequel un mouvement du piston (24) est généré lors d'une activation de la charge propulsive,
et pour lequel l'unité piston-cylindre (22) est relié sans renvoi avec le verrou (16), de sorte que lors du déplacement du piston (24), le verrou (16) peut être déplacé de sa position de verrouillage dans sa position d'ouverture, pour lequel le premier composant (12) possède un trou de verrouillage (44), dans lequel le verrou (16) se prolonge au moins dans la position de verrouillage, pour lequel le piston (24) de l'unité piston-cylindre (22) est formé en deux parties avec un élément de poussée (40) et un élément de verrouillage (42), **caractérisé en ce que** l'élément de poussée (40) et l'élément de verrouillage (42) sont agencés de telle sorte que, dans la position ouverte, l'élément de verrouillage (42) et l'élément de poussée (40) passent entièrement à travers le trou de verrouillage (44), de sorte que la liaison mâle-femelle du premier et du second composant (12,14) par l'élément de verrouillage (42) est libérée.

2. Dispositif de déverrouillage (10), en particulier pour un dispositif de protection de véhicule,
avec un verrou (16), lequel dans une position de verrouillage établit une connexion mâle-femelle au moins partiellement entre un premier composant déverrouillable (12) et un second composant (14) et permet, dans une position ouverte, un mouvement relatif des deux composants (12,14),
et un actionneur pyrotechnique (18) comprenant un élément pyrotechnique (20) ayant une charge propulsive et une unité piston-cylindre (22) comportant un piston (24) et un cylindre (26),
**caractérisé en ce qu'**un mouvement du piston (24) est généré lors d'une activation de la charge propulsive, et pour lequel l'unité piston-cylindre (22) est relié sans renvoi avec le verrou (16), de sorte que lors du déplacement du cylindre (26) le verrou (16) peut être déplacé de sa position de verrouillage à sa position d'ouverture.

3. Dispositif de déverrouillage selon la revendication 1, **caractérisé en ce que** le cylindre (26) de l'unité piston-cylindre (22) est formé par le deuxième composant (14), et/ou **caractérisé en ce que** le verrou (16) est lui-même formé par le piston (24) de l'unité piston-cylindre (22).

4. Dispositif de déverrouillage selon la revendication 2, **caractérisé en ce que** l'unité piston-cylindre (22) est un module séparé, dans lequel le piston (24) est fixé au second composant (14).

5. Dispositif de déverrouillage selon la revendication 2, **caractérisé en ce que** le piston (24) et /ou un troisième composant (16a) fixé au piston comportent une partie de verrouillage (36) et une partie de déverrouillage (38), présentent en particulier des sections transversales ou des diamètres différents, pour lequel, de préférence, la partie de déverrouillage (38) forme un évidement, le long duquel le premier composant (12) est mobile dans l'état déverrouillé.

6. Dispositif de déverrouillage selon l'une des revendications précédentes 2 ou 4, **caractérisé en ce que** le verrou (16) est formé par le cylindre (26) et/ou un composant relié avec le cylindre (26), dans lequel le cylindre (26) de déverrouillage est mobile et la partie de verrouillage du cylindre (26) éloignée du premier composant (12) est mobile, de préférence dans lequel le piston (24) peut être rendu libre dans la zone du premier composant (12).

7. Dispositif de déverrouillage selon l'une des revendications précédentes 1 ou 3, **caractérisé en ce qu'**un dispositif de fixation (48) est prévu, lequel fixe le verrou (16) après déverrouillage dans sa position ouverte, et/ou **caractérisé en ce qu'**un dispositif de positionnement séparé (46) du piston (24) et du cylindre (26) est prévu pour maintenir le verrou (16) dans la position de verrouillage, et notamment pour éviter une libération intempestive.

8. Dispositif de déverrouillage selon l'une des revendications précédentes 1, 3 ou 7, **caractérisé en ce que** le verrou (16) comporte un élément d'actionnement (50), lequel permet le verrouillage et le déverrouillage manuel du dispositif de déverrouillage (10).

9. Dispositif de déverrouillage selon l'une des revendications précédentes, **caractérisé en ce que** la direction de déverrouillage (13) et la direction de déplacement (19) du piston (24) ou du cylindre (26) sont disposées l'une par rapport à l'autre selon un angle compris entre 45° à 135°, de préférence entre 80° et 100°, en particulier 90°.

10. Dispositif de protection du véhicule, en particulier un dispositif de protection des occupants, avec un dispositif de déverrouillage (10) selon l'une des revendications précédentes, dans lequel le premier ou le deuxième composant (12, 14) du dispositif de déverrouillage (10) est relié à la carrosserie du véhicule, et l'autre composant (14, 12) est relié au dispositif de déverrouillage (10) avec le premier ou le deuxième composant (12, 14).
